# EUROPEAN PATENT APPLICATION

(11) **EP 4 442 715 A1**
(43) Date of publication of application: **09.10.2024**
(21) Application number: 22901064.0
(22) Date of filing: 14.11.2022
(51) Int. Cl.: C08F 8/08, C08G 59/14, C08G 65/40

(54) **PHENOXY RESIN, COMPOSITION, CURED PRODUCT, AND METHOD FOR PRODUCING PHENOXY RESIN**

(30) Priority: 01.12.2021 JP 2021195395
(71) Applicant: Sakata INX Corp., Osaka-shi, Osaka 550-0002 (JP)
(72) Inventor: TAKEDA, Akihiro, Osaka-shi, Osaka 550-0002 (JP); HISANAGA, Yoshihiro, Osaka-shi, Osaka 550-0002 (JP); YOKOYAMA, Yuka, Osaka-shi, Osaka 550-0002 (JP); YASUI, Tatsuya, Osaka-shi, Osaka 550-0002 (JP)
(74) Representative: Cabinet Beau de Loménie
(86) International application number: PCT/JP2022/042223
(87) International publication number: WO 2023/100631

(57) **Abstract**

Provided is a phenoxy resin capable of obtaining a cured product having excellent flexibility, being capable of suppressing warping due to curing shrinkage, and having a self-healing function. The phenoxy resin includes a structure represented by the following formula (1) and a structure represented by the following formula (2): 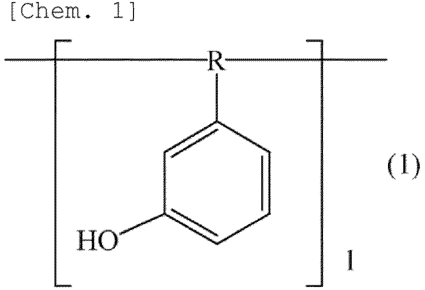 wherein R is a C10-C18 hydrocarbon group, and l is an integer of 1 to 10; 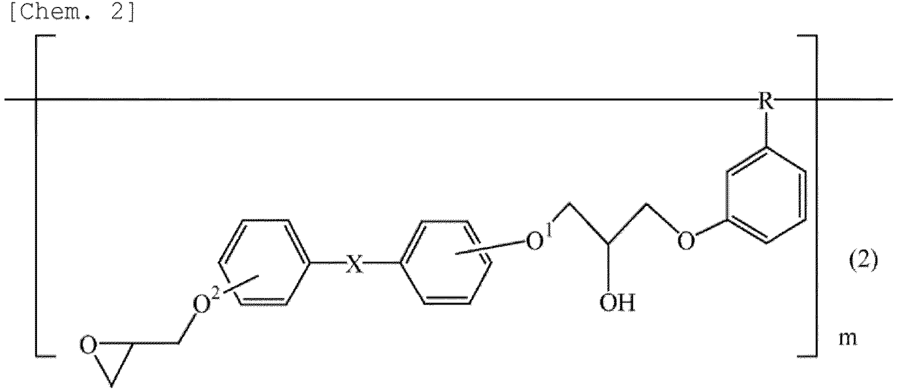 wherein X is a C2-C10 divalent linking group derived from a hydrocarbon, R is a C10-C18 hydrocarbon group, and m is an integer of 1 to 10.

## Description

### TECHNICAL FIELD

The present invention relates to a phenoxy resin, a composition, a cured product, and a method for producing the phenoxy resin.

### BACKGROUND ART

The phenoxy resin is a useful compound that is widely used as paints, adhesives, insulating materials, etc. because it has excellent properties such as flexibility, heat resistance, insulation, and adhesion.

Therefore, various studies have been conducted to create new phenoxy resins with excellent properties.

For example, Patent Literature 1 discloses a phenoxy resin obtained by reacting a specific bifunctional epoxy compound with a specific bifunctional phenolic compound.

### CITATION LIST

### - Patent Literature

Patent Literature 1: JP 2021-98836 A

### SUMMARY OF INVENTION

### - Technical Problem

In recent years, materials having a self-healing function (the function to absorb external forces and heal damage) have attracted attention in the field of paints, for example.

Conventional phenoxy resins have not been sufficiently studied for their self-healing function, and there was a need for a material that had the properties of the phenoxy resin and the self-healing function.

### - Solution to Problem

Therefore, an objective of the present invention is to provide a phenoxy resin capable of obtaining a cured product having excellent flexibility, being capable of suppressing warping due to curing shrinkage, and having a self-healing function.

More specifically, the present invention is a phenoxy resin including a structure represented by the following formula (1) and a structure represented by the following formula (2): 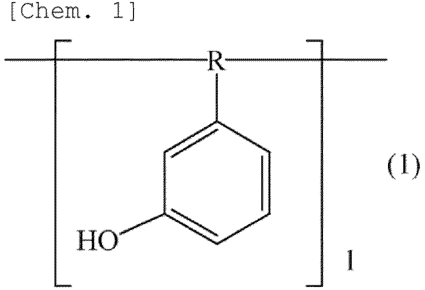 wherein R is a C10-C18 hydrocarbon group, and 1 is an integer of 1 to 10; 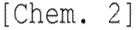 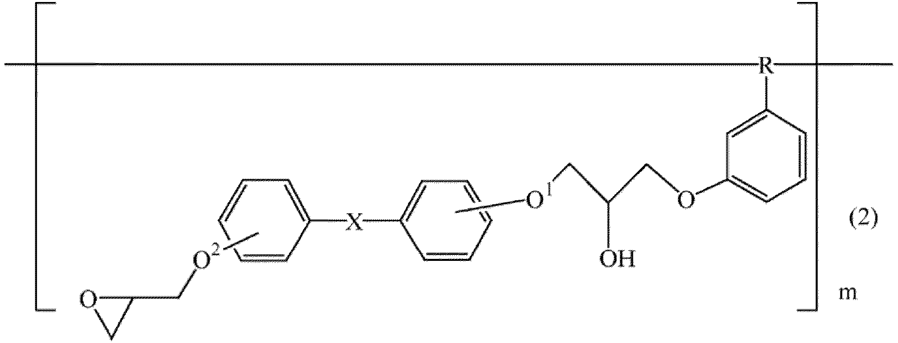 wherein X is a C2-C10 divalent linking group derived from a hydrocarbon, R is a C10-C18 hydrocarbon group, and m is an integer of 1 to 10.

In the phenoxy resin of the present invention, R is preferably a C12-C16 hydrocarbon group in the formulae (1) and (2).

In the phenoxy resin of the present invention, the formula (1) is preferably derived from cardanol.

A composition of the present invention includes the phenoxy resin of the present invention.

The composition of the present invention preferably further includes a curing agent.

The composition of the present invention preferably further includes a curing catalyst.

A cured product of the present invention is prepared by curing the above phenoxy resin and/or the above composition.

A method for producing the phenoxy resin of the present invention includes a step of reacting a compound represented by the following formula (3) with a compound represented by the following formula (4): 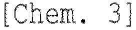 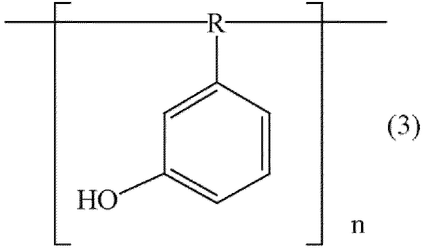 wherein R is a C10-C18 hydrocarbon group, and n is an integer of 2 to 20; 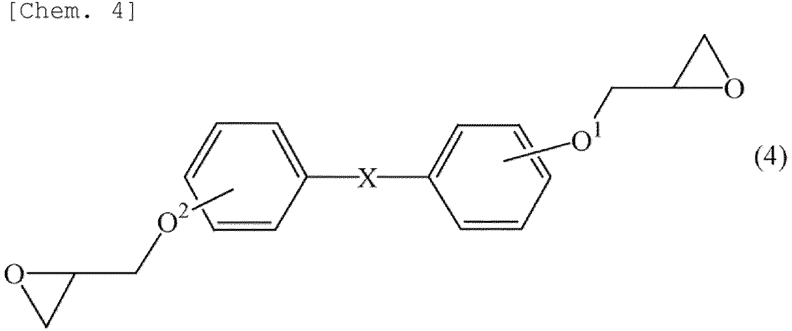 wherein X is a C2-C10 divalent linking group derived from a hydrocarbon.

### - Advantageous Effects of Invention

According to the present invention, a phenoxy resin capable of obtaining a cured product having excellent flexibility, being capable of suppressing warping due to curing shrinkage, and having a self-healing function can be provided.

### DESCRIPTION OF EMBODIMENTS

### (Phenoxy Resin)

A phenoxy resin of the present invention includes a structure represented by the following formula (1) and a structure represented by the following formula (2): 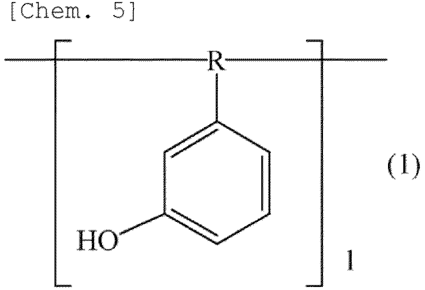 wherein R is a C10-C18 hydrocarbon group, and 1 is an integer of 1 to 10; 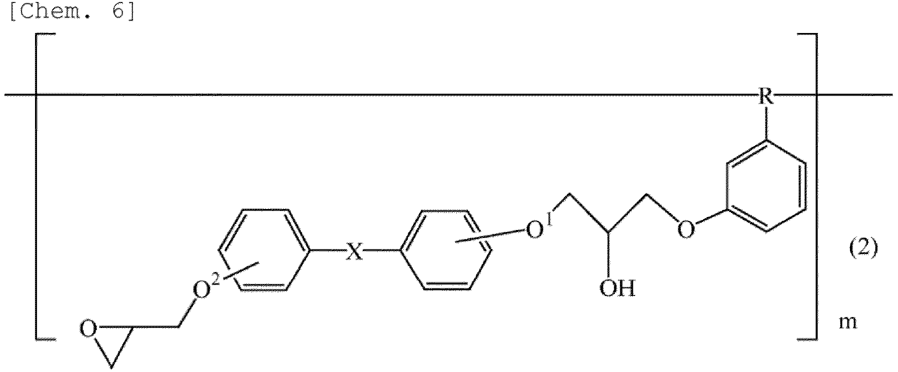 wherein X is a C2-C10 divalent linking group derived from a hydrocarbon, R is a C10-C18 hydrocarbon group, and m is an integer of 1 to 10.

In the formula (1), R is a C10-C18 hydrocarbon group.

The C10-C18 hydrocarbon group may be linear or branched. The C10-C18 hydrocarbon group may also be saturated or unsaturated. In particular, it is preferably a C11-C17 hydrocarbon group, and more preferably a C12-C16 hydrocarbon group from the viewpoints of flexibility and warp suppression of a cured product of the present invention.

The formula (1) is preferably derived from cardanol from the viewpoints of suitably imparting flexibility and suitably suppressing warping, as well as from the viewpoint of easy availability of corresponding raw materials.

The structures derived from the cardanol include, for example, those having a cardanol structure where R is a C15 and H25-H31 hydrocarbon group.

In the formula (1), l means the number of structural units represented in parentheses of the formula (1) in the phenoxy resin.

In the formula (1), 1 is 1 to 10. The structural units represented in the parentheses of the formula (1) may be present either continuous (block) or random in the phenoxy resin.

In the formula (2), R is a C10-C18 hydrocarbon group.

The C10-C18 hydrocarbon group may be linear or branched. The C10-C18 hydrocarbon group may also be saturated or unsaturated. In particular, it is preferably a C11-C17 hydrocarbon group, and more preferably a C12-C16 hydrocarbon group from the viewpoints of flexibility and warp suppression of the cured product of the present invention.

In the formula (2), R includes, for example, those having a cardanol structure where R is a C15 and H25-H31 hydrocarbon group from the viewpoints of suitably imparting flexibility and suitably suppressing warping.

In formula (2), X is a C2-C10 divalent linking group derived from a hydrocarbon.

The C2-C10 divalent linking group may be linear or branched, and may also have a cyclic structure. Specifically, examples thereof include an alkylene group, an alkenylene group, an alkynylene group, and a cycloalkylidene group.

In particular, it is preferably a C3-C7 alkylene group from the viewpoint of easy availability.

The C2-C10 divalent linking group may include molecules other than carbon such as oxygen and nitrogen atoms in the linking group.

The C2-C10 divalent linking group may have a substituent, and examples thereof include an alkyl group, an alkoxy group, a hydroxyl group, an alkoxy-substituted alkyl group, and a carboxyl group.

In the formula (2), O¹ may be in any ortho, meta, or para position with respect to X, and O² may be in any ortho, meta, or para position with respect to X, but from the viewpoint of easy availability, each is preferably in the para position with respect to X.

In the formula (2), m means the number of structural units represented in parentheses of the formula (2) in the phenoxy resin.

In the formula (2), m is 1 to 10. The structural units represented in the parentheses of the formula (2) may be present either continuous (block) or random in the phenoxy resin.

The phenoxy resin of the present invention has a weight average molecular weight (Mw) of preferably 3,000 to 20,000, more preferably 6,000 to 10,000.

The weight average molecular weight is measured, for example, as polystyrene equivalent of a gel permeation chromatography (GPC) method.

### (Method for Producing Phenoxy Resin)

A method for producing the phenoxy resin of the present invention includes a step of reacting a compound represented by the following formula (3) with a compound represented by the following formula (4): 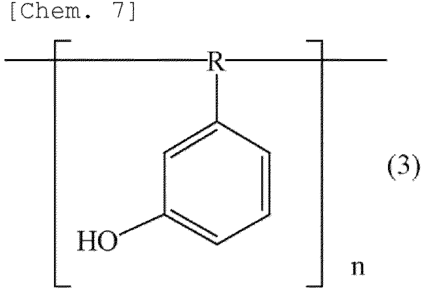 wherein R is a C10-C18 hydrocarbon group, and n is an integer of 2 to 20; 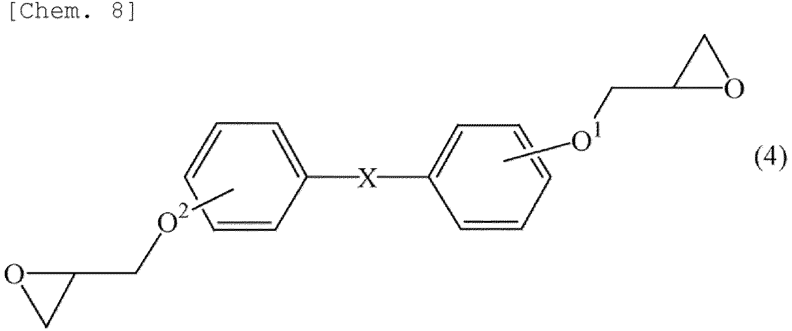 wherein X is a C2-C10 divalent linking group derived from a hydrocarbon.

In the method for producing the phenoxy resin of the present invention, the compound represented by the formula (3) is prepared.

The compound represented by the formula (3) can be commercially purchased or synthesized by the following method.

The method for synthesizing the compound represented by the formula (3) is reaction of a compound represented by the following formula (5) in the presence of an acid catalyst: 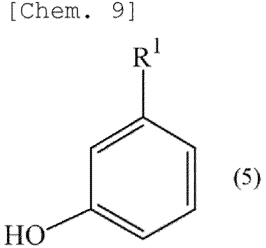 wherein R¹ is a C10-C18 hydrocarbon group.

In the formula (5), R¹ is a C10-C18 hydrocarbon group.

The C10-C18 hydrocarbon group may be linear or branched. The C10-C18 hydrocarbon group may also be saturated or unsaturated. In particular, it is preferably a C11-C17 hydrocarbon group, and more preferably a C12-C16 hydrocarbon group from the viewpoints of flexibility and warp suppression of the cured product of the present invention.

In the above formula (5), R¹ includes, for example, those having a cardanol structure where R¹ is a C15 and H25-H31 hydrocarbon group, from the viewpoints of suitably imparting flexibility to the cured product of the present invention and suitably suppressing warping of the cured product of the present invention.

As for the acid catalyst, a known one can be used, for example, an inorganic acid such as sulfuric acid, hydrochloric acid, and nitric acid, and an organic acid such as acetic acid, citric acid, propionic acid, oxalic acid, and p-toluenesulfonic acid can be used.

In particular, it is preferably p-toluenesulfonic acid from the viewpoints of catalytic activity and solubility in a solution.

A content of the acid catalyst is about 0.1 to 4 parts by mass with respect to 100 parts by mass of the compound represented by the formula (5).

A reaction temperature when reacting the compound represented by the formula (5) in the presence of the acid catalyst is, for example, about 120°C to 180°C. The reaction time is, for example, about 1 to 10 hours.

The fact that the desired compound represented by the formula (3) has been obtained can be confirmed, for example, by confirming the decrease of a peak derived from the formula (5) and the distillation of a new component using gel permeation chromatography (GPC).

The apparatus (stirrer, reflux device, etc.) used in the above reaction can be appropriately selected from known ones.

After the reaction, the resulting compound may be or may not be purified by a known method. The resulting compound is purified more preferably by a known method.

In the step of reacting the compound represented by the formula (3) with the compound represented by the formula (4), the compound represented by the formula (3) is reacted with the compound represented by the formula (4) under a basic environment.

By reacting a hydroxyl group of the compound represented by the formula (3) with an epoxy group of the compound represented by the formula (4), the phenoxy resin of the present invention is obtained.

In the formula (3), n is 2 to 20.

In the compound represented by the formula (3), a position where the epoxy group of the compound represented by the formula (4) reacts with respect to the hydroxyl group may be continuous (blocked) or random.

In the compound represented by the formula (4), X is a C2-C10 divalent linking group derived from a hydrocarbon.

The C2-C10 divalent linking group may be linear or branched, and may also have a cyclic structure. Specifically, examples thereof include an alkylene group, an alkenylene group, an alkynylene group, and a cycloalkylidene group.

In particular, it is preferably a C3-C7 alkylene group from the viewpoint of easy availability.

The C2-C10 divalent linking group may include molecules other than carbon such as oxygen and nitrogen atoms in the linking group.

The C2-C10 divalent linking group may have a substituent, and examples thereof include an alkyl group, an alkoxy group, a hydroxyl group, an alkoxy-substituted alkyl group, and a carboxyl group.

In the formula (4), O¹ may be in any ortho, meta, or para position with respect to X, and O² may be in any ortho, meta, or para position with respect to X, but from the viewpoint of easy availability, each of O¹ and O² is preferably in the para position with respect to X.

In the above reaction, a mass ratio of the compound represented by the formula (3) to the compound represented by the formula (4) (the compound represented by the formula (3) : the compound represented by the formula (4)) is preferably 1 : 0.7 to 1.5 from the viewpoint of coating film properties when cured.

A base used in the step of reacting the compound represented by the formula (3) with the compound represented by the formula (4) is not limited, and examples thereof include an alkali metal hydride, an alkaline earth metal hydride, an alkali metal hydroxide, an alkaline earth metal hydroxide, an alkali metal carbonate, an alkaline earth metal carbonate, an alkali metal bicarbonate, an alkali metal alkoxide, an alkaline earth metal alkoxide, an alkali metal fluoride, an amine, and an organophosphorus compound.

An amount of the base used varies depending on a type of the base, and is, for example, about 0.1 to 2.0 parts by mass with respect to 100 parts by mass of the compound represented by the formula (3).

In the step of reacting the compound represented by the formula (3) with the compound represented by the formula (4), a solvent may be used.

The solvent is not limited, and examples thereof preferably include water; alcohols such as methanol, ethanol, and 2-propanol; aprotic polar solvents such as dimethyl sulfone, dimethyl sulfoxide, tetrahydrofuran, dioxane, methyl ethyl ketone, methyl isobutyl ketone, acetonitrile, methylene chloride, and dimethyl formamide; aromatic hydrocarbons such as toluene and xylene; aliphatic hydrocarbons such as hexane; chloroform; and carbon tetrachloride.

The solvent may be used alone or in combination of two or more.

An amount of the solvent used is, for example, about 30 parts by mass or less with respect to 100 parts by mass of the compound represented by the formula (3).

A reaction temperature for the step of reacting the compound represented by the formula (3) with the compound represented by the formula (4) is, for example, about 60°C to 120°C. A reaction time is, for example, about 1 to 10 hours.

The fact that the desired phenoxy resin has been obtained can be confirmed, for example, by confirming the decrease of a peak derived from the raw material (e.g., the compound represented by the formula (4)) and the distillation of a new component using gel permeation chromatography (GPC).

The apparatus (stirrer, reflux device, etc.) used in the above reaction can be appropriately selected from known ones.

After the reaction, the resulting phenoxy resin may be or may not be purified by a known method. The resulting phenoxy resin is purified more preferably by a known method.

### (Composition)

A composition of the present invention includes the phenoxy resin of the present invention.

Since the composition of the present invention includes the above phenoxy resin, a cured product having excellent flexibility, being capable of suppressing warping due to curing shrinkage, and having a self-healing function can be obtained.

The composition of the present invention preferably further includes a curing agent.

Examples of the curing agent include an amine curing agent, a phenol curing agent, an acid anhydride curing agent, a polymercaptan curing agent, a polyaminoamide curing agent, an isocyanate curing agent, and a block isocyanate curing agent.

The curing agent may be used alone or in combination of two or more.

A content of the curing agent is preferably 20 to 40 parts by mass with respect to 100 parts by mass of the phenoxy resin.

The composition of the present invention preferably further includes a curing catalyst from the viewpoint of shortening a curing time.

Examples of the curing catalyst include tertiary amine compounds such as benzyl dimethylamine (BDMA) and 2,4,6-trisdimethylaminomethylphenol; and imidazole compounds such as 2-methyl imidazole, and 2-ethyl-4-methylimidazole.

The curing catalyst may be used alone or in combination of two or more.

A content of the curing catalyst is preferably 0.1 to 2.0 parts by mass with respect to 100 parts by mass of the phenoxy resin.

The composition of the present invention may further include a solvent.

Examples of the solvent preferably include water; alcohols such as methanol, ethanol, and isopropyl alcohol; aprotic polar solvents such as dimethyl sulfone, dimethyl sulfoxide, tetrahydrofuran, dioxane, methyl ethyl ketone, methyl isobutyl ketone, acetonitrile, methylene chloride, and dimethylformamide; aromatic hydrocarbons such as toluene and xylene; aliphatic hydrocarbons such as hexane; chloroform; and carbon tetrachloride; but not limited to thereto.

The solvent may be used alone or in combination of two or more.

The composition of the present invention may further include an additive.

Examples of the additive include a photoinitiator, a phosphorus-containing compound, a binder resin, and an inorganic filler.

These can be appropriately selected from known ones.

### (Cured Product)

The cured product of the present invention is prepared by curing the phenoxy resin of the present invention and/or the composition of the present invention.

Since the cured product of the present invention includes the phenoxy resin of the present invention, the cured product has excellent flexibility, being capable of suppressing warping due to curing shrinkage, and has a self-healing function.

The cured product of the present invention can be obtained by curing the phenoxy resin of the present invention and/or the composition of the present invention using conventionally known methods.

For example, the phenoxy resin of the present invention, the curing agent, and the curing catalyst are thoroughly mixed using an extruder, kneader, roller, etc., as necessary, until uniform, to prepare a composition, and then the composition is applied to a base material by a known method, and further left at 20°C to 40°C for 12 to 48 hours, to obtain the cured product of the present invention.

If necessary, the cured product may include an additive.

The cured product of the present invention has excellent flexibility.

The flexibility can be evaluated, for example, by preparing a cured product (100 mm in length × 100 in width, 200 µm in thickness) on a glass plate (100 mm in length × 100 mm in width) and measuring pencil hardness based on JIS K 5600-5-4:1999.

If the pencil hardness is 2B or less, it can be considered to have excellent flexibility.

The pencil hardness is preferably 3B or less, more preferably 4B or less.

The cured product of the present invention is capable of suppressing warping due to curing shrinkage.

The warp suppression can be evaluated, for example, by preparing a cured product (100 mm in length × 100 mm in width, 200 µm in thickness) on a PET film (produced by Toray Industries, Inc. "(R): LUMIRROR S10", 100 mm in length × 100 mm in width), placing it on a flat table, measuring floating heights of the four sides, and calculating a mean value. If the mean value is 5 mm or less, it can be considered that the warping due to curing shrinkage can be sufficiently suppressed.

The cured product of the present invention has a self-healing function.

The self-healing function can be evaluated, for example, by preparing a cured product (100 mm in length × 100 mm in width, 200 µm in thickness) on a PET film (produced by Toray Industries, Inc., "(R): LUMIRROR S10", 100 mm in length × 100 mm in width), scrubbing a surface of the cured material with a brass brush 10 reciprocating times under the circumstance of a temperature of 23°C and 50% RH, and measuring a self-healing time of scratches formed on the surface of the cured product. If the scratch marks can be healed in less than 60 seconds, then the self-healing function can be considered to be sufficient.

The cured product of the present invention preferably has excellent adhesion.

The adhesion can be evaluated, for example, by preparing a cured product (100 mm in length × 100 mm in width, 200 µm in thickness) on a glass plate (100 mm in length × 100 mm in width), performing a 100-square test of the cross-cut test JIS K 5600-5-6: 1999, and measuring the number of squares without peeling in 100 squares.

If the number of squares without peeling in the 100-square test is 90 to 100, it can be considered to have excellent adhesion.

The cured product of the present invention preferably has excellent boiling resistance.

The boiling resistance can be evaluated, for example, by preparing a cured product (100 mm in length × 100 mm in width, 200 µm in thickness) on a glass plate (100 mm in length × 100 mm in width) and observing appearance of the cured product after it is immersed in water at 100°C for 2 hours.

If there is no change in the appearance of the cured product after immersion in water at 100°C for 2 hours, then it can be considered to have excellent boiling resistance.

### EXAMPLES

Hereinafter, the present invention will be described in more detail with examples, but is not limited only to these examples. Unless otherwise specified, "%" means "% by mass" and "parts" means "parts by mass".

### (Example 1)

### [Synthesis of The Compound Represented by The Formula (3)]

In a flask equipped with a stirrer, a reflux cooling tube, and a stirring device, 100 parts by mass of purified cardanol was weighed with nitrogen purging, and 0.8 parts by mass of p-toluenesulfonic acid monohydrate was added to prepare a reaction solution. The reaction solution was then heated to 150°C and stirred for 3 hours.

The reaction temperature was returned to room temperature and neutralized with a sodium hydroxide solution.

An aqueous layer was extracted three times with ethyl acetate, and an organic layer was dried over sodium sulfate.

The sodium sulfate was then removed by filtration and the solvent was distilled off using an evaporator.

The resulting crude product was heated to 300°C and stirred under reduced pressure for 3 hours to remove distilled components to give the compound represented by the formula (3) (R is a C15 hydrocarbon group).

Gel permeation chromatography (GPC) confirmed the decrease of a peak derived from cardanol and the distillation of a new high molecular weight component, confirming that the compound represented by the formula (3) was obtained.

### [Synthesis of Phenoxy Resin]

In a flask equipped with a stirrer, a reflux cooling tube, and a stirring device, 100 parts by mass of the compound represented by the formula (3) was weighed with nitrogen purging, 100 parts by mass of bisphenol A epoxy resin jer-828 (produced by Mitsubishi Chemical Corporation), 0.6 parts by mass of sodium hydroxide, 18 parts by mass of methanol, and 5 parts by mass of water were added to prepare a reaction solution. The reaction solution was then heated to 75°C and stirred under reflux for 3 hours.

The reaction temperature was returned to room temperature and an aqueous layer was extracted three times with toluene and an organic layer was dried over sodium sulfate.

The sodium sulfate was then removed by filtration and the solvent was distilled off using an evaporator to obtain the phenoxy resin including the structure represented by the formula (1) (R is a C15 hydrocarbon group) and the structure represented by the formula (2) (X is a C3 linking group and R is a C15 hydrocarbon group).

Gel permeation chromatography (GPC) confirmed the decrease of a peak derived from the bisphenol A epoxy resin and the distillation of a new high molecular weight component, confirming that the desired phenoxy resin was obtained.

### [Preparation of Cured Product for Test]

100 parts by mass of the phenoxy resin was taken and mixed with 30 parts by mass of a curing agent (ST11, produced by Mitsubishi Chemical Corporation) and 0.5 parts by mass of 2,4,6-trisdimethylaminomethylphenol (produced by Tokyo Chemical Industry Co., Ltd.) to obtain a composition.

The composition was applied to a glass plate (100 mm in length × 100 mm in width) and left at room temperature for 1 day to prepare a cured product 1 for test (100 mm in length × 100 mm in width, 200 µm in thickness).

The composition was also applied to a PET film (produced by Toray Industries, Inc. "(R): LUMIRROR S10", 100 mm in length × 100 mm in width) and left at room temperature for one day to prepare a cured product 2 for test (100 mm in length × 100 mm in width, 200 µm in thickness).

### (Comparative Example 1)

100 parts by mass of a phenoxy resin (YP-40ASM40, produced by NIPPON STEEL Chemical & Material Co., Ltd., bisphenol A type, weight average molecular weight 30,000) was taken and mixed with 1 part by mass of a curing agent (ST11, produced by Mitsubishi Chemical Corporation), and 0.5 parts by mass of 2,4,6-trisdimethylaminomethylphenol (produced by Tokyo Chemical Industry Co., Ltd.) to obtain a composition for comparison.

The composition was applied to a glass plate (100 mm in length × 100 mm in width) and left at room temperature for one day to prepare a cured product 1 for comparison (100 mm in length × 100 mm in width, 200 µm in thickness).

The composition was also applied to a PET film (produced by Toray Industries, Inc. "(R): LUMIRROR S10", 100 mm in length × 100 mm in width) and left at room temperature for one day to prepare a cured product 2 for comparison (100 mm in length × 100 mm in width, 200 µm in thickness).

### <Pencil Hardness>

The pencil hardness was measured according to JIS K 5600-5-4:1999 for the cured product 1 for test and the cured product 1 for comparison.

### <Evaluation of Warping>

The cured product 2 for test and the cured product 2 for comparison were placed on a flat table, and the floating heights of the four sides were measured. A mean value was calculated and evaluated according to the following criteria.

### (Evaluation Criteria)

o: The mean value of the floating heights of the four sides was 5 mm or less.
Δ: The mean value of the floating heights of the four sides was more than 5 mm and 30 mm or less.
×: The mean value of the floating heights of the four sides was more than 30 mm.

### <Evaluation of Self-Healing Function>

The cured product 2 for test and the cured product 2 for comparison were scrubbed with a brass brush 10 reciprocating times under the circumstance of a temperature of 23°C and 50% RH, and the self-healing time of the scratches formed on the surfaces of the cured product were measured.

### (Evaluation Criteria)

∘: Scratch marks were healed in less than 60 seconds.
Δ: Scratch marks were healed in 60 seconds or more and less than 10 minutes.
×: Scratch marks were not healed after 10 minutes.

### <Evaluation of Adhesion>

The cured product 1 for test and the cured product 1 for comparison were subjected to the 100-square test of the cross-cut test JIS K 5600-5-6:1999, and the number of squares without peeling to 100 squares was measured.

### (Evaluation Criteria)

∘: 90 to 100 squares without peeling.
Δ: 70 to 89 squares without peeling.
×: 69 or less squares without peeling.

### <Boiling Resistance Test>

The cured product 1 for test and the cured product 1 for comparison were immersed in water at 100°C for 2 hours, and then the appearance of the cured products was evaluated.

### (Evaluation Criteria)

∘: No change in the appearance was observed to be good.
×: Cured product became cloudy.

**[Table 1]**

| | Example 1 | Com parative Example 1 |
|---|---|---|
| Pencil hardness | 4B | HB |
| Evaluation of warping | ○ | ○ |
| Evaluation of self-healing function | ○ | × |
| Evaluatoin of adhesion | ○ | Δ |
| Boiling resistance test | ○ | × |

From the results of Example 1, it was confirmed that the cured product of the phenoxy resin of the present invention had excellent flexibility, was capable of suppressing warping due to curing shrinkage, and had a self-healing function.

### INDUSTRIAL APPLICABILITY

According to the present invention, a phenoxy resin capable of obtaining a cured product having excellent flexibility, being capable of suppressing warping due to curing shrinkage, and having a self-healing function can be provided.

## Claims

1. A phenoxy resin comprising a structure represented by the formula (1) and a structure represented by the formula (2): 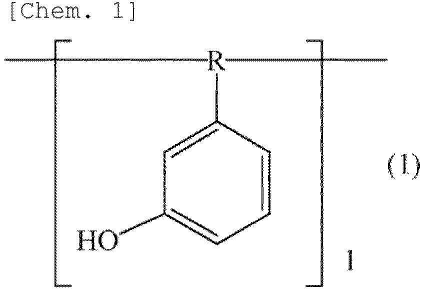
wherein R is a C10-C18 hydrocarbon group, and l is an integer of 1 to 10; 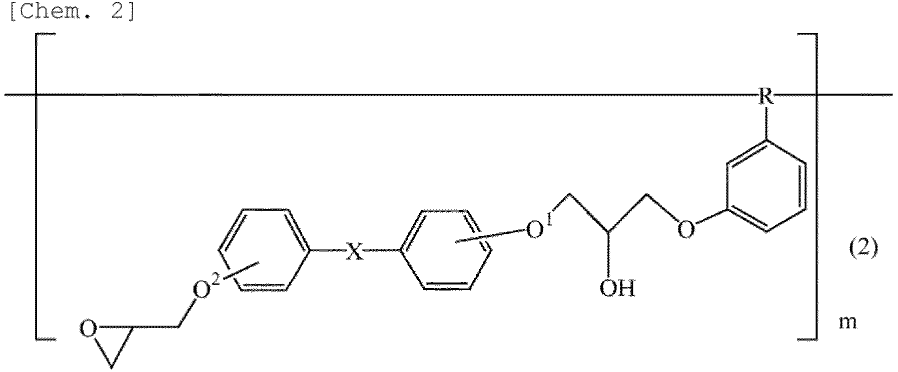
wherein X is a C2-C10 divalent linking group derived from a hydrocarbon, R is a C10-C18 hydrocarbon group, and m is an integer of 1 to 10.

2. The phenoxy resin according to claim 1, wherein R is a C12-C16 hydrocarbon group in the formulae (1) and (2).

3. The phenoxy resin according to claim 1 or 2, wherein the formula (1) is derived from cardanol.

4. A composition comprising the phenoxy resin according to any one of claims 1 to 3.

5. The composition according to claim 4, wherein the composition further comprises a curing agent.

6. The composition according to claim 5, wherein the composition further comprises a curing catalyst.

7. A cured product prepared by curing the phenoxy resin according to any one of claims 1 to 3 and/or the composition according to any one of claims 4 to 6.

8. A method for producing the phenoxy resin according to any one of claims 1 to 3,
the method comprising a step of reacting a compound represented by the formula (3) with a compound represented by the formula (4): 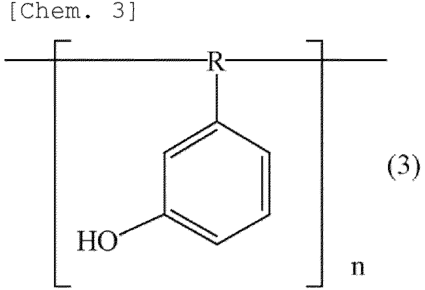
wherein R is a C10-C18 hydrocarbon group, and n is an integer of 2 to 20; 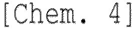 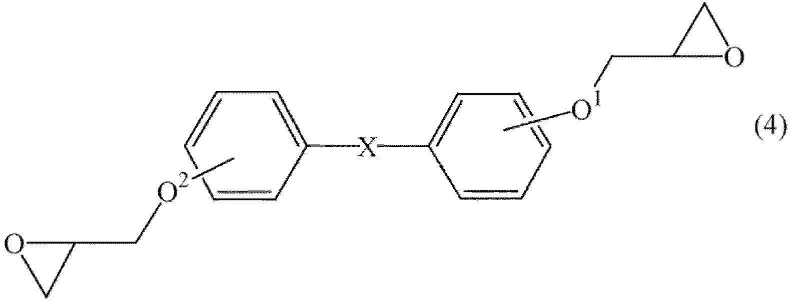
wherein X is a C2-C10 divalent linking group derived from a hydrocarbon.
